# EUROPÄISCHE PATENTSCHRIFT

(11) **EP 2 636 640 B1**
(45) Veröffentlichungstag und Bekanntmachung des Hinweises auf die Patenterteilung: **06.08.2014**
(21) Anmeldenummer: 13000984.8
(22) Anmeldetag: 26.02.2013
(51) Int. Cl.: B82Y 15/00, G01N 21/35, G01N 21/55, G01N 21/65

(54) **Sensorsubstrat für die oberflächenverstärkte Spektroskopie**
Sensor substrate for surface enhanced spectroscopy
Substrat de capteur pour la spectroscopie exaltée de surface

(30) Priorität: 09.03.2012 DE 102012004582
(43) Veröffentlichungstag der Anmeldung: 11.09.2013
(73) Patentinhaber: Fraunhofer-Gesellschaft zur Förderung der angewandten Forschung e.V., 80686 München (DE)
(72) Erfinder: Katzmann, Julia, D-01069 Dresden (DE); Härtling, Thomas, D-01187 Dresden (DE)
(74) Vertreter: Gagel, Roland

(56) Entgegenhaltungen:
- EP-A2- 1 445 601
- US-A1- 2008 278 728
- US-A1- 2008 297 802
- FATEMEH EFTEKHARI ET AL: "Nanoholes As Nanochannels: Flow-through Plasmonic Sensing", ANALYTICAL CHEMISTRY, Bd. 81, Nr. 11, 1. Juni 2009 (2009-06-01), Seiten 4308-4311, XP055067143, ISSN: 0003-2700, DOI: 10.1021/ac900221y
- HULTEEN J C ET AL: "A GENERAL TEMPLATE-BASED METHOD FOR THE PREPARATION OF NANOMATERIALS", JOURNAL OF MATERIALS CHEMISTRY, ROYAL SOCIETY OF CHEMISTRY, Bd. 7, Nr. 7, 1. Juli 1997 (1997-07-01), Seiten 1075-1087, XP000703793, ISSN: 0959-9428, DOI: 10.1039/A700027H

## Beschreibung

### Technisches Anwendungsgebiet

Die vorliegende Erfindung betrifft ein Sensorsubstrat für die oberflächenverstärkte Spektroskopie, das für infrarote und/oder sichtbare Strahlung transparent und mit mehreren durchgängigen Kanälen durchsetzt ist, in denen durch abschnittsweise metallische Beschichtung mehrere in Längsrichtung der Kanäle voneinander beabstandete Antennenelemente gebildet sind. Die Erfindung betrifft auch die Verwendung des vorgeschlagenen Sensorsubstrats in der oberflächenverstärkten Infrarot(IR)-Spektroskopie und oberflächenverstärkten Ramanspektroskopie.

Die Infrarot-Spektroskopie ist eine vielseitige optische Analysetechnik, welche in vielen wirtschaftlichen Bereichen eine wichtige Rolle spielt. So kommt sie beispielsweise in der chemischen und pharmazeutischen Industrie, der Bioverfahrenstechnik, der Medizin und der Sicherheitstechnik zum Einsatz. Sie wird zur labelfreien Charakterisierung und Identifikation molekularer Spezies in Festkörpern, Flüssigkeiten und Gasen genutzt. Für die Identifikation wird die Eigenschaft der Moleküle genutzt, im mittleren IR-Bereich des elektromagnetischen Spektrums, d.h. im Wellenlängenbereich von etwa 3 bis 10 µm Wellenlänge, spezifische Absorptionsbanden aufzuweisen, die mittels IR-Spektroskopie detektiert werden können. Die IR-Absorption von Molekülen weist allerdings sehr kleine Querschnitte auf. Dies limitiert die Detektion kleiner Stoffmengen und erschwert die auf IR-Spektroskopie basierende Sensorik.

Die Sensitivität der IR-Spektroskopie von Molekülen lässt sich mit der Technik der sog. oberflächenverstärkten Spektroskopie (SEIRS = Surface Enhanced Infrared Spectroscopy) erhöhen. Dabei werden speziell ausgebildete Substrate eingesetzt, die die einfallende Infrarotstrahlung lokal verstärken. Die lokalen Bereiche verstärkter Infrarotstrahlung werden auch als Hotspots bezeichnet. Die zu untersuchenden Analyte werden dabei auf das mit Infrarotstrahlung beleuchtete Substrat aufgebracht. Befinden sich Moleküle in der Nähe eines Hotspots, so kann von ihnen ein besonders hoher Anteil der Infrarotstrahlung absorbiert und das Detektionssignal dadurch verstärkt werden. Für die Verstärkung des Anregungslichts werden die Schwingungen freier Elektronen in Metallen, sog. Oberflächenplasmonen, ausgenutzt. So tritt ein derartiger Verstärkungseffekt bspw. bei einem Golddraht von wenigen Mikrometern Länge auf, bei dem sich aufgrund der optisch angeregten Elektronenschwingung ein hohes elektromagnetisches Feld um die Drahtenden bildet. Moleküle im Bereich dieser Drahtenden erfahren dabei das verstärkte elektromagnetische Feld und liefern dadurch ein erhöhtes Detektionssignal.

### Stand der Technik

Aus der EP 2 199 777 A1 ist ein Sensorsubstrat für die oberflächenverstärkte IR-Spektroskopie bekannt, bei dem eine nanoskalige metallische Schicht so auf ein dielektrisches Substrat aufgebracht wird, dass sich eng beabstandete metallische Inseln ausbilden. Der Verstärkungseffekt tritt an den Rändern dieser Inseln auf.

Neubrech et al., "Resonant Plasmonic and Vibrational Coupling in a Tailored Nanoantenna for Infrared Detection", Phys. Rev. Lett. 101, 157403-1 bis 157403-4 (2008), zeigen die feldverstärkende Wirkung von Nanodrähten, die auf einem planaren Substrat abgeschieden wurden. Die Länge der Nanodrähte wird so gewählt, dass sie in etwa der halben Wellenlänge der zu verstärkenden IR-Strahlung entspricht. Allerdings ist diese Technik für die Herstellung von großflächigen Sensorsubstraten, wie sie für einen industriellen Einsatz erforderlich sind, zu aufwändig.

Aus der US 2008/0297802 A1 ist ein Sensorsubstrat für die oberflächenverstärkte IR-Spektroskopie bekannt, das mit durchgängigen Kanälen durchsetzt ist. In den Kanälen sind durch abschnittsweise metallische Beschichtung mehrere in Längsrichtung der Kanäle voneinander beabstandete ringförmige Antennenelemente zur Verstärkung der Infrarotstrahlung ausgebildet.

Die bisher bekannten Sensorsubstrate erlauben jedoch entweder keine gezielte Einstellung der Plasmonresonanz oder lassen sich nicht in einfacher Weise großflächig herstellen.

Die Aufgabe der vorliegenden Erfindung besteht darin, ein Sensorsubstrat für die oberflächenverstärkte Spektroskopie anzugeben, das sich in einfacher Weise großflächig herstellen lässt, eine Einstellung der Plasmonresonanz bei der Herstellung ermöglicht und eine hohe Sensitivität für die Detektion von Molekülen aufweist.

### Darstellung der Erfindung

Die Aufgabe wird mit dem Sensorsubstrat gemäß Patentanspruch 1 gelöst. Vorteilhafte Ausgestaltungen des Sensorsubstrats sind Gegenstand der abhängigen Patentansprüche oder lassen sich der nachfolgenden Beschreibung sowie dem Ausführungsbeispiel entnehmen.

Das im infraroten und/oder sichtbaren Spektralbereich transparente dielektrische Sensorsubstrat ist mit durchgängigen Kanälen durchsetzt. Unter den durchgängigen Kanälen werden Kanäle verstanden, die zu jeweils zwei sich gegenüberliegenden Oberflächen des Substrates offen sind und somit einen Durchfluss des zu vermessenden Analyten ermöglichen. Die optische Transparenz im infraroten Spektralbereich bezieht sich insbesondere auf den Bereich zwischen 1 µm und 10 µm Wellenlänge und ist beim Einsatz des Substrates in der IR-Spektroskopie erforderlich. Bei einem Einsatz in der Ramanspektroskopie sollte das Substrat im sichtbaren Spektralbereich transparent sein, d.h. insbesondere im Bereich zwischen 380 nm und 780 nm. Bei dem vorgeschlagenen Sensorsubstrat sind die Innenseiten der Kanäle abschnittsweise so metallisch beschichtet, dass mehrere in Längsrichtung der Kanäle aufeinander folgende und voneinander beabstandete Nanoröhren als Antennenelemente gebildet werden, die eine Länge von ≥ 500 nm, vorzugsweise zwischen 1 µm und 10 µm aufweisen. In einer anderen Ausgestaltung, wie sie für die Ramanspektroskopie geeignet ist, weisen die Nanoröhren eine Länge zwischen ca. 50 nm und ca. 400 nm auf. Unter dem Begriff der Nanoröhren sind hierbei röhrenförmige metallische Strukturen mit einem Verhältnis von Länge zu Außendurchmesser von ≥ 3, vorzugsweise ≥ 5, zu verstehen, wobei der Außendurchmesser im Nanometerbereich, d. h. bei kleiner 1 µm, vorzugsweise ≤ 500 nm, liegt. Der gegenseitige Abstand der Kanäle (Randabstand) kann dabei weniger als 100 nm betragen, so dass eine sehr hohe Packungsdichte erreicht wird. Damit müssen auch die Kanäle in dem Substrat entsprechende Dimensionen aufweisen. Die Länge der Nanoröhren wird dabei jeweils so gewählt, dass sie in etwa der halben Wellenlänge der zu verstärkenden Infrarotstrahlung oder Strahlung im sichtbaren Spektralbereich für die jeweilige Anwendung entspricht.

Über die Länge der Antennenelemente lässt sich bei dem vorgeschlagenen Sensorsubstrat die Plasmonresonanz bspw. im mittleren Infrarot und damit im spektralen Bereich von Molekülschwingungen gezielt einstellen. Durch die Abstimmung der Plasmonresonanz und Molekülschwingungsfrequenz kann ein sehr hoher Verstärkungsfaktor des SEIRS-Signals erreicht werden. Durch die Ausbildung der Antennen in den Kanälen bzw. Poren eines Substrates wird eine 3D-Integration und sehr hohe Packungsdichte der plasmonisch aktiven Antennenelemente erreicht. Auch dies führt zu einer verbesserten Sensitivität beim Einsatz dieses Substrates in der IR-Spektroskopie. Das vorgeschlagene Sensorsubstrat lässt sich großflächig in einfacher Weise herstellen, wie weiter unten noch näher beschrieben wird.

Der Ort höchster Verstärkung tritt bei dem vorgeschlagenen Sensorsubstrat an den Enden der Antennenelemente bzw. Nanoröhren auf. In einer vorteilhaften Ausgestaltung weisen diese Nanoröhren in Längsrichtung der Kanäle nur einen gegenseitigen Abstand zueinander auf, der ≤ 10 nm beträgt. Die nicht elektrisch leitfähige Lücke zwischen den Nanoröhren bildet die Hotspots, in denen das elektrische Feld nochmals gegenüber dem Ende einer einzelnen Nanoantenne erhöht ist. Wird die Antenne mit ihrer Resonanzwellenlänge angeregt und befinden sich Analytmoleküle im Bereich der Lücke, kommt es zu einer verstärkten Anregung der Infrarot-aktiven Schwingungsbanden der Moleküle im resonanten Spektralbereich der Antenne. Dies lässt sich in bekannter Weise bei einer Transmissionsmessung als Absorptionslinie im aufgezeichneten Infrarot-Spektrum nachweisen.

Durch die hohle Ausbildung der Antennen in Form von Nanoröhren können die Analyte, insbesondere Flüssigkeiten und Gase, direkt an die Hotspots transportiert werden. Der Durchmesser der Nanoröhren kann dabei von unter 10 nm bis über 100 nm reichen und beträgt vorzugsweise ≤ 150 nm.

Die Ausbildung als Nanoröhren bietet den weiteren Vorteil, dass nur eine sehr geringe Menge an Analyten für die Messung eingesetzt werden muss. Weiterhin besteht die Möglichkeit, auch Messungen mit wässrigen Analyten durchzuführen. Wasser absorbiert Infrarotstrahlung sehr stark und behindert damit bei vielen anderen Sensorsubstraten die Analyse von Prozessen, die in wässriger Umgebung ablaufen. Dies stellt ein großes Problem dar, da die Infrarot-Spektroskopie dann gerade in vielen Bereichen der Medizin und Biochemie ausfällt, für die sie eigentlich am besten geeignet ist. Mit dem vorgeschlagenen Sensorsubstrat kann hingegen auch eine Messung mit wässrigen Analyten durchgeführt werden, da die Absorption durch das Wasser hier aufgrund der geringen Analytenmenge in den Kanälen nur gering ist.

Die vorangegangenen Ausführungen und Vorteile gelten in analoger Weise auch für den Einsatz des Sensorsubstrates in der Ramanspektroskopie, wobei dann lediglich die Länge der Nanoröhren bzw. Antennenelemente entsprechend kürzer gewählt werden muss.

Als Substratmaterial kann beispielsweise ein anodisiertes Metalloxid oder (poröses) Silizium mit entsprechend ausgebildeten Poren eingesetzt werden, die die durchgängigen Kanäle bilden. Vorzugsweise sind die Poren bzw. Kanäle des Substrates zumindest annähernd parallel zueinander ausgerichtet und erstrecken sich zwischen den beiden Hauptflächen des Substrates. In einer besonders vorteilhaften Ausgestaltung wird anodisiertes Aluminiumoxid als Substratmaterial eingesetzt. Die Durchmesser und Abstände der bei der Anodisierung des Aluminiums gebildeten parallelen Porenkanäle lassen sich in bekannter Weise durch die Parameter des Anodisierungsprozesses, insbesondere durch die bei der Anodisierung angelegte Spannung, einstellen. Das Substrat besteht vorzugsweise aus einem elektrisch nicht leitfähigen Material.

Bei der Herstellung des vorgeschlagenen Sensorsubstrats, beispielsweise aus dem genannten anodisierten Aluminiumoxid, werden in den Kanälen multisegmentierte Metallröhren abgeschieden, wie dies bspw. aus W. Lee et al., "A Template-Based Electrochemical Method for the Synthesis of Multisegmented Metallic Nanotubes", Angew. Chem. Int. Ed. 2005, 44, 6050 - 6054 zur Herstellung metallischer Nanoröhren beschrieben ist. Die metallischen Nanoröhren werden bei diesem Herstellungsverfahren mittels Elektrodeposition in den Kanälen abgeschieden. Während in der genannten Veröffentlichung die abgeschiedenen Nanoröhren anschließend durch einen Ätzprozess aus dem Substrat gelöst werden, verbleiben sie bei der Herstellung des erfindungsgemäßen Sensorsubstrates in den Kanälen des Substrates. Die einzelnen metallischen Segmente werden entlang der Längsrichtung der Kanäle bspw. in einer Abfolge A-B-A durch Elektrodeposition abgeschieden, wobei A und B unterschiedliche Metalle darstellen. Die Segmente des Metalls B dienen dabei der Erzeugung der Lücke zwischen den späteren Antennenelementen aus dem Metall A. Die Segmente des Metalls B werden daher vorzugsweise mit einer entlang der Längsrichtung der Kanäle gemessenen Länge von < 10 nm erzeugt, während die Länge der Segmente des Metalls A vorzugsweise zwischen 1 und 10 µm beträgt. Nach dieser Erzeugung der multisegmentierten Metallröhren in den Kanälen wird das Metall B mit einem geeigneten Ätzmedium selektiv entfernt, um die elektrisch nicht leitenden Lücken zwischen den dadurch erhaltenen Nanoröhren aus dem Metall A zu erhalten. An den Stellen, an denen vorher das Metall B abgeschieden war, befindet sich nun die entsprechende Lücke. Das Ätzmedium zum selektiven Ätzen des Metalls B kann durch in einfacher Weise durch die Kanäle zugeführt werden. Als Metalle bieten sich hierbei für das Metall A bspw. Au oder Ag an, für das Metall B bspw. Ag oder Ni. Als geeignete Ätzlösung für das selektive Ätzen von Ni kann bspw. HCl dienen, für Ag HNO₃. Ein derartiges Sensorsubstrat kann großflächig mit einer hohen Dichte an Kanälen hergestellt werden. Für die Herstellung des Substrats mit den Kanälen und darin abgeschiedenen Nanoröhren sind lediglich einfach zu handhabende Prozesse wie die bekannte Anodisierung und die Elektrodeposition erforderlich.

Das vorgeschlagene Sensorsubstrat lässt sich bspw. in der oberflächenverstärkten IR-Spektroskopie und auch in der oberflächenverstärkten Ramanspektroskopie (SERS = Surface Enhanced Raman Spectroscopy) einsetzen und ermöglicht eine hohe Nachweisempfindlichkeit für die zu detektierenden Moleküle. Dabei werden die zu vermessenden Analyte durch die Kanäle des Substrates transportiert, das gleichzeitig mit IR-Licht oder sichtbarem Licht bestrahlt wird. Das durch das Substrat bzw. den Analyten in den Nanoröhren transmittierte IR-Licht wird spektral aufgelöst detektiert, um die entsprechenden Absorptionslinien oder Absorptionsbanden der darin befindlichen Moleküle im IR-Bereich zu detektieren. Im Falle der Ramanspektroskopie wird das im Analyten gestreute Licht spektral aufgelöst erfasst. Das Sensorsubstrat ermöglicht damit eine labelfreie Charakterisierung und Identifikation molekularer Spezies in Analyten, insbesondere in Flüssigkeiten und Gasen, und lässt sich bspw. in der chemischen und pharmazeutischen Industrie, der Bioverfahrenstechnik, der Medizin und der Sicherheitstechnik einsetzen.

### Kurze Beschreibung der Zeichnungen

Das vorgeschlagene Sensorsubstrat wird nachfolgend anhand eines Ausführungsbeispiels in Verbindung mit den Zeichnungen nochmals kurz erläutert. Hierbei zeigen:
- Fig. 1: eine schematische Darstellung eines Beispiels des vorgeschlagenen Sensorsubstrats in Draufsicht; und
- Fig. 2: eine Schnittdarstellung eines Beispiels des vorgeschlagenen Sensorsubstrats.

### Wege zur Ausführung der Erfindung

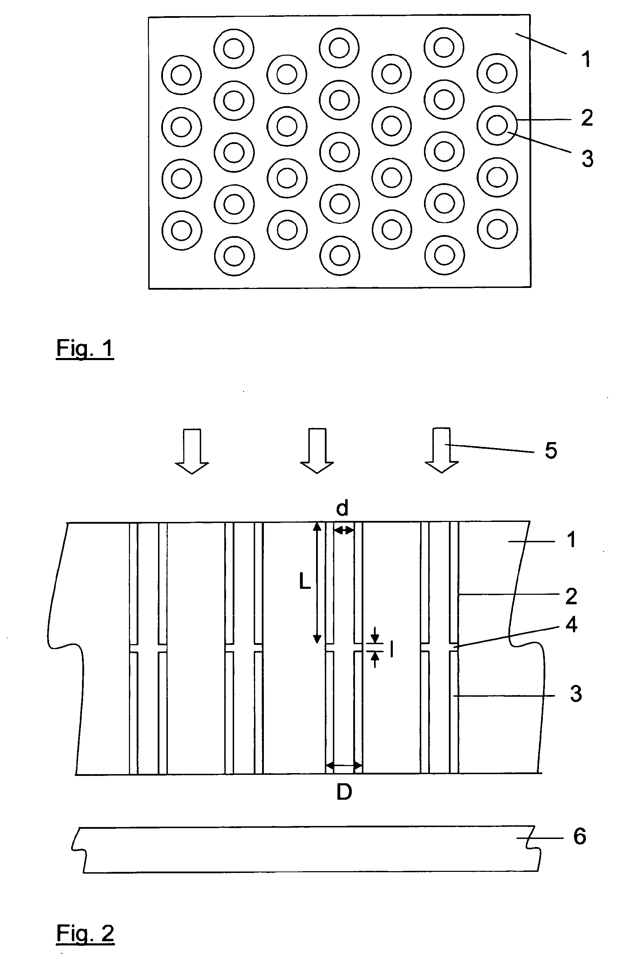

Das im Folgenden beispielhaft dargestellte Sensorsubstrat ist aus anodisiertem Aluminiumoxid gebildet, dessen Porenkanäle beim Anodisierungsprozess gezielt auf die in diesem Beispiel angeführten Dimensionen eingestellt wurden. Figur 1 zeigt hierbei eine Draufsicht auf einen Ausschnitt des Substrats 1, in der schematisiert die Öffnungen der Porenkanäle 2 zu erkennen sind, die das Substrat 1 durchsetzen. Die Innenseiten der parallel verlaufenden Porenkanäle 2 sind zur Bildung von metallischen Nanoröhren 3 abschnittsweise mit Gold beschichtet. Aufgrund der Herstellungstechnik eines derartigen Substrates 1 lässt sich eine hohe Porendichte mit gegenseitigen Randabständen der Porenkanäle 2 von weniger als 100 nm erzielen.

Figur 2 zeigt schematisiert einen Schnitt durch ein derartiges Substrat 1, in dem die durchgängigen Porenkanäle 2 zu erkennen sind, die sich zwischen den beiden Hauptflächen des Substrates 1 erstrecken. In der Figur 2 ist die abschnittsweise Beschichtung der Innenseiten der Porenkanäle 2 zu erkennen, durch die die einzelnen metallischen Nanoröhren 3 gebildet werden. Diese Nanoröhren 3 stellen die feldverstärkenden Antennen des vorgeschlagenen Sensorsubstrats dar. Die Länge L dieser Antennen wird so eingestellt, dass die Plasmonresonanz im mittleren Infrarot liegt und damit im spektralen Bereich von Molekülschwingungen. Durch diese Abstimmung von Plasmonresonanz und Molekülschwingungsfrequenz kann ein sehr hoher Verstärkungsfaktor des SEIRS-Signals erreicht werden. Die Anzahl der in Längsrichtung der Porenkanäle 2 ausgebildeten Nanoröhren 3 ist dabei nicht auf die hier dargestellten zwei Nanoröhren beschränkt. Vielmehr kann auch eine größere Anzahl an Nanoröhren in den Porenkanälen 2 angeordnet sein.

Zwischen den einzelnen Nanoröhren 3 sind in Längsrichtung der Porenkanäle 2 elektrisch nicht leitfähige Lücken 4 ausgebildet. In diesen Lücken 4 ist das elektrische Feld nochmals erhöht gegenüber dem Ende einer einzelnen Nanoröhre. Die Lücken 4 weisen vorzugsweise eine Länge 1 von < 10 nm auf.

Bei der IR-Spektroskopie wird das Substrat 1 von einer Seite (senkrecht oder unter einem Winkel, kollimiert oder fokussiert) mit Infrarotlicht 5 bestrahlt und die durch das Substrat 1 hindurchtretende Strahlung mit einem Detektor 6 spektral aufgelöst erfasst. Der zu vermessende Analyt wird dabei durch die Hohlräume in den einzelnen Nanoröhren 3 transportiert bzw. in diese eingebracht. Befinden sich Analytmoleküle im Bereich des überhöhten elektrischen Feldes in der Lücke 4 zwischen den einzelnen Nanoröhren 3 bzw. Nanoantennen, so kommt es zu einer verstärkten Anregung der Infrarot-aktiven Schwingungsbanden des Moleküls im resonanten Spektralbereich der Antenne. Durch die Transmissionsmessung mit dem Detektor 6 lassen sich diese Schwingungsbanden als Absorptionslinien im aufgezeichneten IR-Spektrum nachweisen. Damit kann das jeweilige Molekül über die gemessenen Absorptionslinien bzw. Absorptionsbanden identifiziert werden.

Der innere Durchmesser d des Hohlraums der Nanoröhren 3 beträgt vorzugsweise < 150 nm und kann bis zu unter 10 nm reichen. Als Analyte können dabei Flüssigkeiten oder Gase eingesetzt werden. aufgrund der geringen Analytmenge, die hierbei zum Einsatz kommt, können auch wässrige Lösungen verwendet werden. Der Außendurchmesser D der Nanoröhren 3, der dem Innendurchmesser der Porenkanäle 2 des Substrats 1 entspricht, liegt vorzugsweise bei < 500 nm. Die Gesamtdicke des Substrates (in Längsrichtung der Porenkanäle) kann beispielsweise zwischen 1 µm und 100 µm bei lateralen Abmessungen des Substrates zwischen 1 mm und mehreren cm betragen.

### Bezugszeichenliste

- 1: Substrat
- 2: Porenkanäle
- 3: Nanoröhren bzw. Nanoantennen
- 4: Lücke
- 5: IR-Strahlung
- 6: Detektor

## Patentansprüche

1. Sensorsubstrat für die oberflächenverstärkte Spektroskopie,
das im infraroten und/oder sichtbaren Spektralbereich transparent und mit durchgängigen Kanälen (2) durchsetzt ist,
in denen durch abschnittsweise metallische Beschichtung der Innenseiten mehrere in Längsrichtung der Kanäle (2) voneinander beabstandete Antennenelemente gebildet sind,
**dadurch gekennzeichnet,**
**dass** die Antennenelemente Nanoröhren (3) mit einem Verhältnis von Länge zu Außendurchmesser von ≥ 3 sind, wobei die Länge der Nanoröhren (3) so gewählt ist, dass sie in etwa der halben Wellenlänge von zu verstärkender Infrarotstrahlung oder Strahlung im sichtbaren Spektralbereich entspricht.

2. Sensorsubstrat nach Anspruch 1,
**dadurch gekennzeichnet,**
**dass** die Nanoröhren (3) in Längsrichtung der Kanäle (2) einen gegenseitigen Abstand von ≤ 10 nm aufweisen.

3. Sensorsubstrat nach Anspruch 1 oder 2,
**dadurch gekennzeichnet,**
**dass** die Nanoröhren (3) einen Innendurchmesser von < 150 nm aufweisen.

4. Sensorsubstrat nach einem der Ansprüche 1 bis 3,
**dadurch gekennzeichnet,**
**dass** sich die Kanäle (2) parallel zueinander im Substrat (1) erstrecken.

5. Sensorsubstrat nach einem der Ansprüche 1 bis 4,
**dadurch gekennzeichnet,**
**dass** das Substrat (1) aus einem anodisierten Metalloxid gebildet ist.

6. Sensorsubstrat nach einem der Ansprüche 1 bis 4,
**dadurch gekennzeichnet,**
**dass** das Substrat (1) aus porösem Silizium gebildet ist.

7. Sensorsubstrat nach einem der Ansprüche 1 bis 6,
**dadurch gekennzeichnet,**
**dass** das Sensorsubstrat (1) im infraroten Spektralbereich transparent ist und die Nanoröhren (3) eine Länge von ≥ 500 nm aufweisen.

8. Sensorsubstrat einem der Ansprüche 1 bis 5,
**dadurch gekennzeichnet,**
**dass** das Sensorsubstrat (1) im sichtbaren Spektralbereich transparent ist und die Nanoröhren (3) eine Länge im Bereich von 50 bis 400 nm aufweisen.

9. Verwendung des Sensorsubstrates nach Anspruch 7 bei der oberflächenverstärkten Infrarotspektroskopie, bei der ein zu untersuchender Analyt in die Kanäle des Substrates (1) eingebracht wird, das Substrat (1) mit Infrarotlicht (5) durchleuchtet wird und das durch das Substrat (1) und den Analyten transmittierte Infrarotlicht (5) mit einem Detektor (6) spektral aufgelöst gemessen wird.

10. Verwendung des Sensorsubstrates nach Anspruch 8 bei der oberflächenverstärkten Ramanspektroskopie, bei der ein zu untersuchender Analyt in die Kanäle des Substrates (1) eingebracht wird, das Substrat (1) mit Licht (5) im sichtbaren Spektralbereich durchleuchtet wird und das durch den Analyten gestreute Licht (5) mit einem Detektor (6) spektral aufgelöst gemessen wird.

## Claims

1. A sensor substrate for surface-enhanced spectroscopy,
which is transparent in the infrared and/or visible spectral range and is pierced with through channels (2),
in which a plurality of antenna elements which are spaced from one another in the longitudinal direction of the channels (2) are formed by means of a partial metallic coating on the interior thereof,
**characterized in that**
the antenna elements are nanotubes (3) with a length to external diameter ratio of ≥ 3, wherein the length of the nanotubes (3) is selected such that it corresponds to approximately half the wavelength of the infrared light or light in the visible spectral range to be enhanced.

2. The sensor substrate as claimed in claim 1,
**characterized in that**
in the longitudinal direction of the channels (2), the nanotubes (3) are separated from each other by ≤ 10 nm.

3. The sensor substrate as claimed in claim 1 or claim 2,
**characterized in that**
the internal diameter of the nanotubes (3) is < 150 nm.

4. The sensor substrate as claimed in one of claims 1 to 3,
**characterized in that**
the channels (2) extend parallel to each other in the substrate (1).

5. The sensor substrate as claimed in one of claims 1 to 4,
**characterized in that**
the substrate (1) is formed by an anodized metal oxide.

6. The sensor substrate as claimed in one of claims 1 to 4,
**characterized in that**
the substrate (1) is formed from porous silicon.

7. The sensor substrate as claimed in one of claims 1 to 6,
**characterized in that**
the sensor substrate (1) is transparent in the infrared spectral range and the length of the nanotubes (3) is ≥ 500 nm.

8. The sensor substrate as claimed in one of claims 1 to 5,
**characterized in that**
the sensor substrate (1) is transparent in the visible spectral range and the length of the nanotubes (3) is in the range 50 to 400 nm.

9. Use of the sensor substrate as claimed in claim 7 in surface-enhanced infrared spectroscopy, in which an analyte to be investigated is introduced into the channels of the substrate (1), infrared light (5) is shone through the substrate (1) and the spectral distribution of the infrared light (5) transmitted through the substrate (1) and the analyte is measured using a detector (6).

10. Use of the sensor substrate as claimed in claim 8 in surface-enhanced Raman spectroscopy, in which an analyte to be investigated is introduced into the channels of the substrate (1), light (5) in the visible spectral range is shone through the substrate (1) and the spectral distribution of the light (5) scattered through the analyte is measured using a detector (6).

## Revendications

1. Substrat de capteur pour la spectroscopie amplifiée en surface,
transparent dans le domaine spectral infrarouge et/ou visible et entrecoupé de canaux (2) traversants,
dans lesquels, dans la direction longitudinale des canaux (2), plusieurs éléments d'antenne espacés les uns des autres sont formés par un revêtement des faces intérieures, métallique par endroits,
**caractérisé en ce que**
les éléments d'antenne sont des nanotubes (3) ayant un rapport de longueur à diamètre extérieur ≥ 3, la longueur des nanotubes (3) étant sélectionnée de façon à correspondre approximativement à la demi-longueur d'onde du rayonnement infrarouge à amplifier ou du rayonnement dans le domaine spectral visible à amplifier.

2. Substrat de capteur selon la revendication 1, **caractérisé en ce que** les nanotubes (3) présentent dans la direction longitudinale des canaux (2) un espacement mutuel ≤ 10 nm.

3. Substrat de capteur selon la revendication 1 ou 2, **caractérisé en ce que** les nanotubes (3) présentent un diamètre intérieur de < 150 nm.

4. Substrat de capteur selon l'une quelconque des revendications 1 à 3, **caractérisé en ce que** les canaux (2) s'étendent dans le substrat (1) en parallèle les uns aux autres.

5. Substrat de capteur selon l'une quelconque des revendications 1 à 4, **caractérisé en ce que** le substrat (1) est formé à partir d'un oxyde métallique anodisé.

6. Substrat de capteur selon l'une quelconque des revendications 1 à 4, **caractérisé en ce que** le substrat (1) est formé à partir de silicium poreux.

7. Substrat de capteur selon l'une quelconque des revendications 1 à 6, **caractérisé en ce que** le substrat de capteur (1) est transparent dans le domaine spectral infrarouge et les nanotubes (3) présentent une longueur ≥ 500 nm.

8. Substrat de capteur selon l'une quelconque des revendications 1 à 5, **caractérisé en ce que** le substrat de capteur (1) est transparent dans le domaine spectral visible et les nanotubes (3) présentent une longueur dans la plage de 50 à 400 nm.

9. Utilisation du substrat de capteur selon la revendication 7 en spectroscopie infrarouge amplifiée en surface, dans laquelle un analyte à analyser est introduit dans les canaux du substrat (1), le substrat (1) est examiné à la lumière infrarouge (5), et la lumière infrarouge (5) transmise par l'analyte est mesurée après résolution spectrale par un détecteur (6).

10. Utilisation du substrat de capteur selon la revendication 8 en spectroscopie Raman amplifiée en surface, dans laquelle un analyte à analyser est introduit dans les canaux du substrat (1), le substrat (1) est examiné à la lumière (5) dans le domaine spectral visible, et la lumière (5) diffusée par l'analyte est mesurée après résolution spectrale par un détecteur (6).
